# EUROPEAN PATENT SPECIFICATION

(11) **EP 2 578 769 B1**
(45) Date of publication and mention of the grant of the patent: **28.10.2015**
(21) Application number: 11786666.5
(22) Date of filing: 25.05.2011
(51) Int. Cl.: E04F 13/00, E04B 2/88, H01L 31/042, E04F 13/08

(54) **SUPPORT STRUCTURE FOR DOUBLE-SIDED POWER GENERATION TYPE SOLAR CELL PANELS**
STÜTZSTRUKTUR FÜR DOPPELSEITIGE SOLARZELLENTAFELN ZUR STROMERZEUGUNG
STRUCTURE DE SUPPORT POUR PANNEAUX DE CELLULES SOLAIRES DU TYPE À GÉNÉRATION D'ÉNERGIE DOUBLE FACE

(30) Priority: 26.05.2010 JP 2010120762
(43) Date of publication of application: 10.04.2013
(73) Proprietor: KAJIMA CORPORATION, Tokyo 107-8388 (JP); Sanyo Electric Co., Ltd., Osaka 570-8677 (JP)
(72) Inventor: FUJIMURA, Tadashi, Tokyo 107-8388 (JP); FUNABASHI, Shinichi, Tokyo 107-8388 (JP); KOBAYASHI, Hisakata, Tokyo 107-8388 (JP)
(74) Representative: Strehl Schübel-Hopf & Partner
(86) International application number: PCT/JP2011/061948
(87) International publication number: WO 2011/148967

(56) References cited:
- WO-A1-2010/039541
- GB-A- 2 457 742
- JP-A- 2000 064 543
- JP-A- 2001 323 625
- JP-A- 2002 070 442
- JP-A- 2002 076 416
- JP-A- 2005 093 923
- JP-A- 2009 147 363
- MASAHIRO YOSHINO ET AL.: 'Development of photovoltaic modules integrated with a metal curtain wall' SOLAR ENERGY MATERIALS AND SOLAR CELLS vol. 47, October 1997, pages 235 - 242, XP004099643

## Description

### TECHNICAL FIELD

The present invention relates to a support structure for a double-sided power generation type solar cell panel capable of reducing the number of holding members for installing a solar cell panel, which receives light incident from both front and rear surfaces and generates power, in an exterior side of an outer wall face of a building structure and supporting the solar cell panel with high power generation efficiency.

### BACKGROUND ART

A solar cell panel installed in a roof surface or an outer wall of a building comes into wide use in order to promote effective use of natural energy. For example, there has been proposed a solar cell panel used as a part of the curtain wall in a case where the solar cell panel is installed in an outer wall of a building (refer to Patent Literature 1). Here, an excessive temperature rise is suppressed by providing a circulation path for flowing the outer air in the rear surface of the solar cell panel.

Meanwhile, as a type of the solar cell panel, there is known a double-sided power generation type solar cell panel capable of generating power using the light incident from both front and rear sides (refer to Patent Literature 2).

### [Citation List]

[Patent Literature 1] Japanese Unexamined Patent Application No. 2002-21231 (Claim 1, Paragraphs [0003] and [0011], and FIG. 1)
[Patent Literature 2] Japanese Unexamined Patent Application No. 2003-166220 (Claim 1, Paragraphs [0016] to [0020], and FIGS. 3 to 5)

JP 2002 076416 A discloses a double-sided light receiving solar battery array in which a solar cell panel module is held by a frame in four corners.

GB 2 457 742 A discloses a cladding for a building with one-side solar collection devices in which the collection devices can be tilted in order to improve the incident angle of sunlight.

### DISCLOSURE OF INVENTION

### PROBLEM TO BE SOLVED BY THE INVENTION

It is anticipated that the aforementioned double-sided power generation type solar cell panel contributes to use in power generation of reflection light in the outer wall in a case where it is installed in an outer wall of a building. However, in Patent Literature 1, there is no consideration regarding a method of using the reflection light in the outer wall. Therefore, it fails to find a specific power generation method using the reflection light in the outer wall of the double-sided power generation type solar cell panel.

Under the aforementioned background, the present invention proposes a support structure capable of effectively generating power using a solar cell panel in a case where a double-sided power generation type solar cell panel is installed in an outer wall face of a building structure.

### MEANS FOR SOLVING PROBLEM

The problem is solved by the support structure for a double-sided power generation type solar cell of claim1.

The "structural in-plane direction of the outer wall face" refers to an in-plane direction along the front surface of the outer wall face and includes horizontal and vertical directions. The "structural out-of-plane direction" refers to a direction perpendicular to the "structural in-plane direction" and indicates a direction perpendicular to the front surface of the outer wall face.

A plurality of solar cell panels may be arranged to face the outer wall face continuously or discontinuously across a plurality of stages in a height direction or may be arranged continuously or discontinuously in a structural in-plane horizontal direction (horizontal direction). In a case where a plurality of solar cell panels are arranged across a plurality of stages in a height direction, they constitute the aforementioned "panel package including a group of plural solar cell panels. A plurality of solar cell panels may be arranged in two directions including the height direction and the structural in-plane horizontal direction. Hereinafter, in the present document, the solar cell panel 5 and the panel package 9 are collectively referred to as a solar cell panel and the like.

The "state that the solar cell panel faces the outer wall face" refers to a state that a face of the solar cell panel is in parallel with or substantially in parallel with the outer wall face when the solar cell panel is seen as a plate. If the front and rear surfaces of the solar cell panel are perfectly plane, it means that the front and rear surfaces are in parallel with the outer wall face. In a case where the front and rear surfaces of the solar cell panel are curved, the front and rear surfaces are not perfectly in parallel with the outer wall face. However, a plane of symmetry between the front and rear surfaces (a plane positioned in the center of the thickness direction (plate thickness direction)) becomes in parallel with the outer wall face.

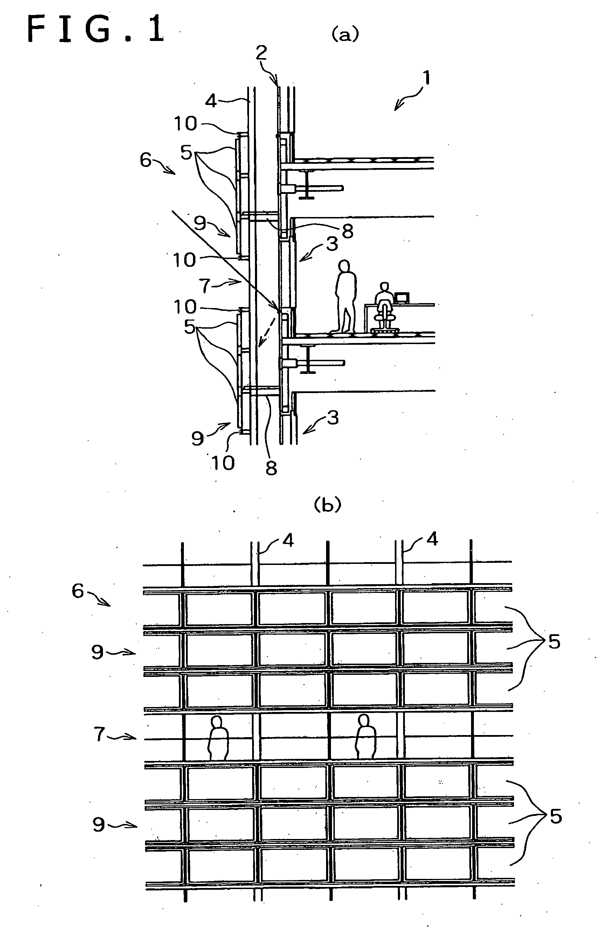

In Claim 1, a phrase that the solar cell panel and the like are "directly held" by the overhang members 12, 12 means that upper and lower end portions of the solar cell panel and the like are held by some portions of the overhang members 12, 12 protruded side by side in a height direction to the exterior side of the vertical members 4, 4 juxtaposed in a structural in-plane horizontal direction as illustrated in FIGS. 1B, 3A, and 6A. A phrase "indirectly held" means that, for example, the horizontal members 10, 10 for holding upper and lower end portions of the solar cell panel and the like are installed side by side in a height direction between the juxtaposed overhang members 12, 12, and a certain member for directly holding the solar cell panel and the like is interposed between the overhang members 12, 12 and the upper and lower end portions of the solar cell panel and the like as in the case where the solar cell panel and the like are held by the horizontal members 10, 10 juxtaposed in a height direction (Claim 2).

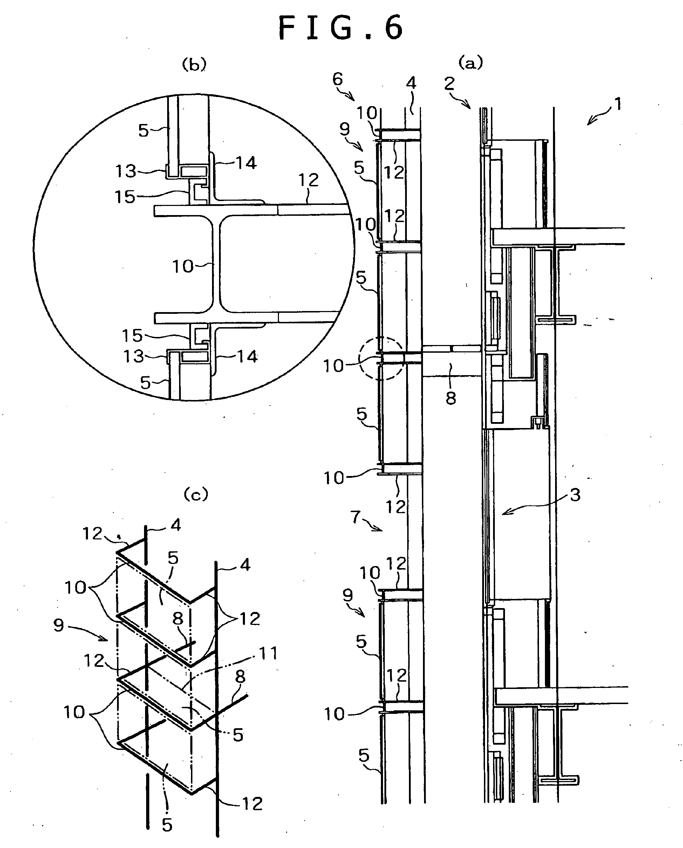

In both the cases where the solar cell panel and the like are directly and indirectly held by the overhang members 12, 12, the solar cell panel and the like (such as the solar cell panel 5 or the panel package 9) are supported by the arm members 8, 8 (supported by the building structure through the arm members 8, 8) while the solar cell panel and the like are vertically held in a position separated from the outer wall face 2 to the exterior side as illustrated in FIG. 6C. Therefore, the solar cell panel and the like may be held by at least the upper or lower end portions, and it is not necessary to hold the solar cell panel and the like in both end portions of the longitudinal direction (horizontal direction). Therefore, it is possible to reduce the number of members for holding the solar cell panel and the like. In a direct case, the solar cell panel and the like are vertically held by the overhang members 12, 12. In an indirect case, the solar cell panel and the like are vertically held, for example, by the horizontal members 10, 10.

According to the present invention, the overhang members 12, 12 are protruded (overhung) side by side in a height direction to the exterior side from each vertical member 4, 4 juxtaposed in a structural in-plane horizontal direction. Therefore, the overhang members 12, 12 are juxtaposed in both the height direction and the structural in-plane horizontal direction. For this reason, as the outer wall face is seen from the exterior side, four overhang members 12, 12 are disposed in a vertex point position of a tetragon. In Claim 2, since the horizontal member 10 is installed between the overhang members 12, 12 juxtaposed in the structural in-plane horizontal direction, the horizontal members 10, 10 are installed side by side in a height direction.

If the solar cell panel and the like are held by the horizontal members 10, 10 or the overhang members 12, 12 juxtaposed in the height direction, it is not necessary to hold the solar cell panel and the like in the four peripheries (four sides) including both end portions in the longitudinal direction (horizontal direction) in addition to the upper and lower end portions. As a result, as a frame member for holding the solar cell panel and the like, two overhang members 12, 12 or the horizontal members 10, 10 juxtaposed in a height (vertical) direction may be necessary.

Therefore, both end portions of the longitudinal direction of the solar cell panel and the like are finished without a necessity of being held by the frame member. Therefore, as described above, it is possible to reduce the number of members for holding the solar cell panel and the like and maintain both end portions of the longitudinal direction of the solar cell panel and the like in an opened state without a covering. As a result, the solar cell panel and the like can receive the reflection light from the outer wall face, that is, the reflection light from the rear surface of the solar cell panel and the like in the both end portion sides of the longitudinal direction, and can receive the reflection light widely compared to a case where the solar cell panel and the like are held in four peripheries (four sides). Therefore, it is possible to improve power generation efficiency in the rear surface of the solar cell panel.

The improvement of the power generation efficiency is based on a fact that the reflection light on the outer wall face 2 arrives at the rear surface of the solar cell panel 5 across a wide range. Since the reflection light arrives across a wide range, it is possible to obtain a state that the reflection light reaches many cells of the solar cell panel 5. Therefore, compared to a case where the reflection light reaches a small area, it is possible to increase the output electric current of the solar cell panel 5 and improve the output characteristic.

As illustrated in FIGS. 6A to 6C, the solar cell panel and the like (solar cell panel 5 or panel package 9) are supported in a position separated from the exterior side face of the vertical member 4 to the exterior side. Therefore, the rear surface of the solar cell panel and the like is maintained apart from the front surface of the vertical member 4. As a result, since a possibility that the reflection light on the outer wall face 2 is blocked by the vertical member 4 is also lowered, the reflection light arrives at the rear surface of the solar cell panel and the like across a wide range, and the power generation efficiency of the solar cell panel is more improved.

In this case, since the rear surface of the solar cell panel and the like is apart from the front surface of the vertical member 4, the solar cell panel and the like do not make contact with the vertical member 4. Therefore, the reflection light on the outer wall face 2 easily arrives at the rear surface of the solar cell panel and the like across a wide range, and the power generation efficiency is improved. This case is based on a fact that, since the rear surface of the solar cell panel and the like (solar cell panel 5) is apart from the front surface of the vertical member 4, the light reflected on the outer wall face 2 and directed to the rear surface of the solar cell panel and the like is not blocked by the vertical member 4, or the amount of the blocked light is reduced, so that the reflection light on the outer wall face 2 easily arrives at the rear surface of the solar cell panel and the like across a wide range.

In order to cause the rear surface of the solar cell panel and the like to be apart from the vertical member 4, for example, a support member such as a fastener 14 or a bracket for supporting the solar cell panel 5 is connected to a part of the vertical member 4 as illustrated in FIG. 6B, and the solar cell panel 5 is held and supported by that support member.

The solar cell panel and the like are directly held by the upper and lower horizontal members 10, 10 and are supported by the building structure using the overhang members 12, 12 connected (linked) to both ends of the longitudinal direction of each horizontal member 10, the vertical member 4 connected (linked) to the end portion of the outer wall face 2 side of the overhang member 12, and the arm member 8 installed between the vertical member 4 and the outer wall face 2 as described above.

A plurality of solar cell panels 5 may be arranged in a height direction as described above or may be arranged in a structural in-plane horizontal direction (horizontal direction). According to the present invention, a group of solar cell panels 5 arranged across a plurality of stages in a height direction is referred to as a "panel package 9." Including a case where the solar cell panels 5 are arranged in a height direction and a case where the solar cell panels 5 are arranged in a structural in-plane horizontal direction (horizontal direction), an opening 7 may be formed in at least a part of the panel surface 6 of a plurality of solar cell panels 5 in the height direction as illustrated in FIGS. 1A and 1B, so that the panel surface 6 becomes discontinuous in a height direction (Claim 3). The opening 7 may be maintained in an opened state or may have an openable/closable state (Claim 4).

The panel surface 6 of a plurality of solar cell panels 5 refers to surfaces (plane or curved surface) including a plurality of overall solar cell panels 5 arranged at least in a height direction. The panel surface 6 may include surfaces of overall solar cell panels or may include surfaces of a part of overall solar cell panels.

For example, in a case where the front surfaces of overall solar cell panels are provided in the same plane, the panel surface 6 includes surfaces (front surfaces) of overall solar cell panels. In a case where each of front surfaces of overall solar cell panels is provided in a different plane, the panel surface 6 is provided on the plural-solar-cell-panel basis. A phrase "each of a plurality of solar cell panels is provided in a different plane" refers to a case where each of a plurality of solar cell panels (of the front surface) is stepped in a structural out-of-plane direction and a case where each panel surface 6 neighboring in a height direction is alternately stepped in a structural out-of-plane direction.

In a case where the opening 7 is formed in a part of the panel surface 6 at least in a height direction (Claim 3), the opening 7 may be maintained in an opened state at all times without disposing (storing) a wall face material such as glass or a sliding door (sash) or may be maintained in a closed state at all times by disposing (storing) the wall face material in the opening 7. Alternatively, by opening or closing the wall face material provided in the opening 7, the opening 7 may be switched between the opened state and the closed state (Claim 4). In order to ensure power generation in the rear surface of the solar cell panel 5, the opening 7 may have a function of obtaining natural illumination as much as possible such that at least solar light is introduced into (arrives at) the outer wall face 2 from the opening 7, is reflected on the outer wall face 2, and arrives at the rear surface of the solar cell panel 5.

However, if there is a possibility that a temperature rise of the air within a space (buffer space) between the panel surface 6 of a plurality of solar cell panels and the outer wall face 2 influences the atmosphere of the room space inside the outer wall face 2 and degrades room habitability, it is preferable that the opening 7 have a function of discharging the air having a rising temperature inside the room (ventilation duct). For this reason, that is, in order to promote ventilation of the rising air inside the room from the opening 7, it is suitable that the opening 7 is maintained in an opened state or in an openable/closable state (Claim 4). The wall face material may be opened or closed, specifically, by storing a sliding door included in an openable/closable window such as a casement (inward or outward), a pivoted window (horizontal or vertical axis), an outward projecting window and the like in a window frame arranged along the opening 7.

Whether the opening 7 is maintained in an opened state, in an openable/closable state, or in a closed state is determined based on factors such as a geometrical condition, climate, hours of sunlight, and the like in an area of the building structure. For example, in an area where a necessity of suppressing a temperature rising inside the room during the summer season is high, the opening 7 is maintained in an opened state at all times or in a switchable state between an opened state and a closed state in order to use the opening 7 also as a ventilation duct (Claim 4). In an area where it is a necessity of suppressing a temperature rising inside the room is low, the opening 7 may be maintained in any state because whether the opening 7 is maintained in an opened state, in a closed state, or in an openable/closable state is not important.

If the opening 7 is formed in a part of the panel surface 6 of a plurality of solar cell panels 5 in a height direction, and there is discontinuity in a part of the panel surface 6 in a height direction, solar light arrives at the outer wall face 2 positioned in the interior side of the panel surface 6 and is reflected. Since the light reflected on the outer wall face 2 is incident to the rear surface of the solar cell panel 5, it is anticipated that power is generated in the rear surface side of the solar cell panel 5. If the solar cell panel 5 receives light, power is generated due to an electromotive force generated between two types of semiconductors. The power is independently generated from the front surface and the rear surface (back surface) of the solar cell panel 5.

Here, in a case where the opening 7 is maintained in a closed state using a wall face material such as glass, the solar light introducing from the opening 7 to the outer wall face 2 is absorbed in the wall face material, and the light arriving at the outer wall face 2 transmits through the wall face material, so that the light intensity is lowered. For this reason, compared to the case where the opening 7 is maintained in a closed state using the wall face material, the reflection light arriving at the rear surface of the solar cell panel 5 is stronger in the case where the opening 7 is maintained in an opened state. Therefore, from the viewpoint of power generation efficiency in the rear surface, the case where the opening 7 is maintained in an opened state at all times or can be maintained in an opened state (Claim 4) is suitable.

The outer wall face 2 of the building structure usually includes a structure such as a retaining wall and a hanging wall and a glass face (wall face material) such as a sash stored in the opening 3 provided between the retaining wall and the hanging wall. Since the light arriving at the structure and the glass face is entirely reflected and arrives at the rear surface of the solar cell panel 5, the light arriving at the outer wall face 2 from the opening 7 formed in a part of the panel surface 6 contributes to power generation in the rear surface of the solar cell panel 5. In general, since the power generation amount of the solar cell panel 5 is determined based on the light intensity, out of the reflection light from the outer wall face 2, the reflection light on the glass face more contributes to power generation of the solar cell panel 5 compared to the reflection light on the structure.

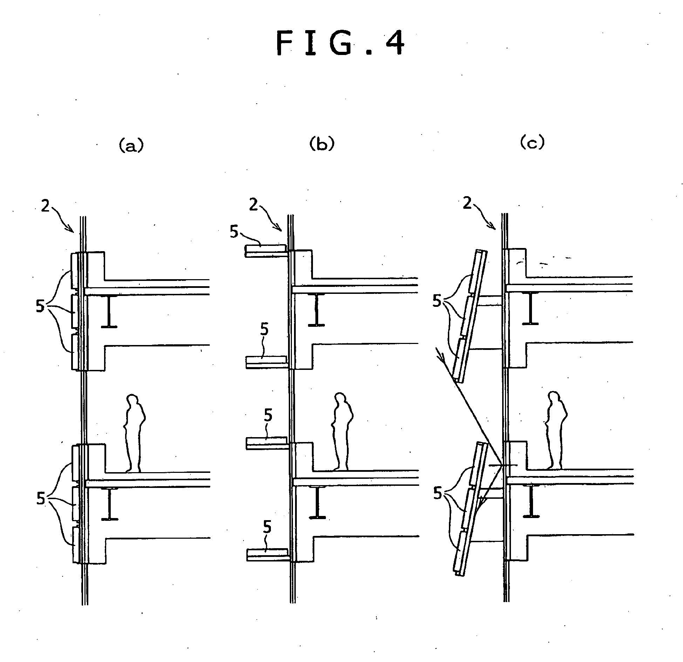

In the arrangement of the solar cell panels 5 in the exterior side of the outer wall face 2, a plurality of types of arrangement examples may be conceivable depending on settings on a direction of the solar cell panel 5 and a distance D from the outer wall face 2 as illustrated in FIGS. 4A to 4C. FIG. 4A illustrates a case where the rear surface of the solar cell panel 5 is arranged to be close to or make contact with the outer wall face 2. FIG. 4B illustrates a case where the front and rear surfaces of the solar cell panel 5 are horizontally arranged. FIG. 4C illustrates a case where the panel package 9 as an assembly of solar cell panels 5 constituting a group across a plurality of stages is arranged in an inclined state against a vertical plane in order to cause the front surface to easily receive direct sunlight.

In the case of FIG. 4A, the building area is not enlarged. However, since there is substantially no cavity (space) between the solar cell panel 5 and the outer wall face 2, the solar light itself does not arrive at the outer wall face 2 positioned in the rear surface of the solar cell panel 5. Therefore, the reflection light does not arrive at the rear surface of the solar cell panel 5. In this case, it is anticipated that power is generated only from the front surface of the solar cell panel 5.

Similarly, in the case of FIG. 4B, since the reflection light on the outer wall face 2 does not arrive at the rear surface of the solar cell panel 5, it is not possible to anticipate power generation in the rear surface. The case of FIG. 4B is effective to improve power generation efficiency in the front surface of the solar cell panel in an area where an angle of insolation is large. However, since the light which is irregularly reflected on the outer wall face 2 and arrives at the rear surface of the solar cell panel 5 is negligible, it does not contribute to power generation in the rear surface.

In the case of FIG. 4C, since there is a cavity (space) between the solar cell panel 5 and the outer wall face 2, it is possible to cause the solar light to arrive at and be reflected on the outer wall face 2 and cause the reflection light to arrive at the rear surface of the solar cell panel 5. However, since the lower portion of the panel package 9 including solar cell panels 5 across a plurality of stages is protruded to the exterior side in order to allow the front surface of the solar cell panel 5 to be effective to the solar light having an angle of insolation across a wide range, an incidence angle of the reflection light to the rear surface of the solar cell panel 5 (an angle against a face perpendicular to the rear surface of the panel package 9) increases. Therefore, it is not possible to improve power generation efficiency in the rear surface of the solar cell panel 5.

Power generation efficiency in the front and rear surfaces of the solar cell panel 5 is higher in a case where the incidence angles (angles α to γ described below) to each of the front and rear surfaces are small, and the light is incident nearly perpendicularly against the front and rear surfaces, compared to a contrary case, because the light intensity received by the front and rear surfaces is higher. However, in the case of FIG. 4C, since the rear surface of the entire panel package 9 is inclined in the same direction as that of the reflection light on the outer wall face 2, it is difficult to cause the reflection light on the outer wall face 2 to arrive at the rear surface of the solar cell panel 5.

Out of the solar light introduced into the outer wall face 2 from the opening 7 between the vertically neighboring panel packages 9, 9 as indicated by a solid arrow line, the solar light passing through the lower end of the upper panel package 9 and the upper end of the lower panel package 9 can arrive at the outer wall face 2, be reflected on the outer wall face 2, and then, barely arrive at the rear surface of the panel package 9. On the contrary, for example, if the height of the opening 7 is greater than that of the example of FIG. 4C, and the solar light is incident at an angle close to an angle symmetrical to the inclination angle of the panel package 9 with respect to a horizontal surface, the reflection angle of the reflection light on the outer wall face 2 is equal to the inclination angle of the panel package 9. Therefore, no light arrives at or is reflected on the rear surface of the panel package 9 (solar cell panel 5).

In this case, a direction of the reflection light of the solar light arriving at the outer wall face 2 from the opening 7 of the panel surface 6 becomes in parallel with the rear surface of the panel package 9. Therefore, the reflection light from the outer wall face 2 is not incident to the rear surface of the panel package 9. Therefore, in this case, if the solar light does not have an angle of insolation equal to or smaller than an angle of the solar light passing through the lower end of the upper panel package 9 and the upper end of the lower panel package 9, the solar light reflected on the outer wall face 2 does not arrive at (is not reflected on) the rear surface of the solar cell panel 5. Therefore, power generation in the rear surface of the panel package 9 is not anticipated.

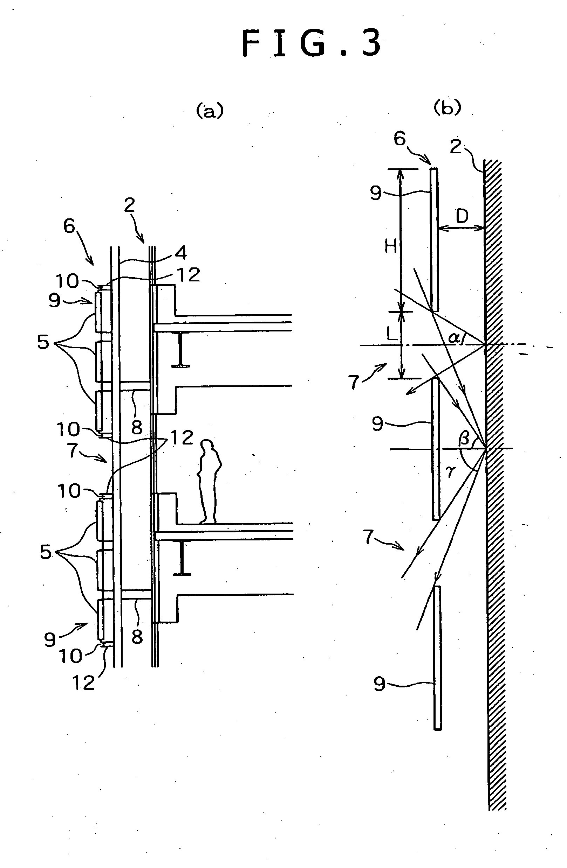

On the contrary, according to the present invention illustrated in FIG. 3A, since the solar cell panel 5 is arranged substantially in parallel with the outer wall face 2 and is disposed apart from outer wall face 2, it is possible to cause the reflection light on the outer wall face 2 to easily be incident to (arrive at) the rear surface of the solar cell panel 5. A phrase "the solar cell panel 5 is in parallel with the outer wall face 2" means that both the front and rear surfaces of the solar cell panel 5 may be substantially in parallel with the outer wall face 2 including a case where the front and rear surfaces are slightly curved as well as a case where the front and rear surfaces are in parallel with each other and constitute a perfect plane.

Exaggeratingly to say, in the case of FIG. 3A, if incidence of the solar light is neither horizontal nor vertical, that is, if the solar light is introduced into the outer wall face 2 from the opening 7, the solar light can be reflected on the outer wall face 2 and arrive at the rear surface of the solar cell panel 5 in principle. Finally, according to the present invention, as long as the reflection light on the outer wall face 2 is not vertically directed, it can arrive at the rear surface of the solar cell panel 5 and be reflected.

However, specifically, in the case of FIG. 3A according to the present invention, if the solar light passing through the upper end of the opening 7 between the vertically neighboring solar cell panels 5 (9) and the like (the lower end of the upper solar cell panel and the like) and arriving at the outer wall face 2 is reflected on the outer wall face 2 in a half-height position of the opening 7 (indicated by the one-dot chain line) and is incident at an angle equal to or smaller than the incidence angle α passing through the lower end of the opening 7 (upper end of the lower solar cell panel and the like) as illustrated in FIG. 3B, the reflection light of the solar light on the outer wall face 2 is deviated from the opening 7. Therefore, the solar light does not arrive at the rear surface of the solar cell panel and the like.

In addition, in a case where the solar light passing through the lower end of the opening 7 and arriving at the outer wall face 2 is reflected on the outer wall face 2 in a half-height position of the solar cell panel 5 (9) and the like (indicated by the one-dot chain line) and is incident at an incidence angle β passing through the upper end of the lower neighboring opening 7, the reflection light of that solar light on the outer wall face 2 is also deviated from the opening 7. Therefore, the solar light does not arrive at the rear surface of the solar cell panel and the like. Furthermore, similarly, in a case where the solar light passing through the upper end of the opening 7 and arriving at the outer wall face 2 is reflected on the outer wall face 2 in a half-height position of the solar cell panel and the like and is incident at an incidence angle γ passing through the lower end of the lower neighboring opening 7, the solar light does not arrive at the rear surface of the solar cell panel and the like.

In summary, if the incidence angle to the outer wall face 2 of the solar light reflected on the outer wall face 2 in a half-height position of the opening 7 provided between upper and lower solar cell panels and the like (solar cell panels 5 or panel packages 9) is greater than α, and the solar light reflected on the outer wall face 2 in a half-height position of the solar cell panel and the like has an angle within an range between β and γ, the solar light reflected on the outer wall face 2 can arrive at the rear surface of the solar cell panel 5. Therefore, it is possible to ensure power generation efficiency.

The incidence angles α, β, and γ can be expressed as tanα=L/2D, tanβ=H/2D, and tanγ=(H+2L)/2D, where H denotes a height of the solar cell panel and the like, L denotes a height of the opening 7, and D denotes a distance between the outer wall face 2 and the rear surface of the solar cell panel and the like. Therefore, it is recognized that the incidence amount of the reflection light on the outer wall face 2 to the rear surface of the solar cell panel 5 can be controlled based on the settings of such values.

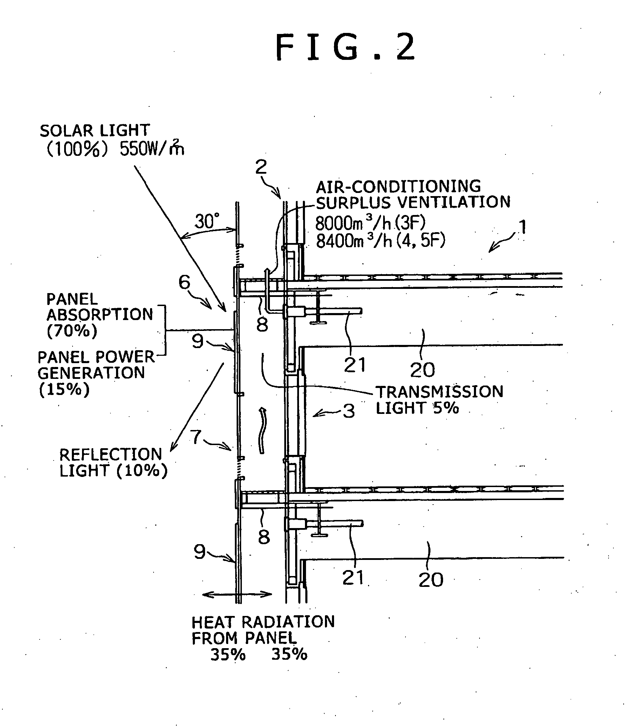

When the solar light arrives at the front surface (vertical plane) of the solar cell panel and the like at an angle of 30° (incidence angle=60°) as illustrated in FIG. 2 (where W/m² denotes a unit of irradiance), it is conceived that about 70% of the solar light is absorbed in the front surface of the solar cell panel 5, 10% is reflected, and 5% transmits through the solar cell panel 5 and arrives at the outer wall face 2 in rough estimation. About 15% of the solar light absorbed in the front surface of the solar cell panel 5 is used in power generation in the front surface. The solar light passing through the solar cell panel 5 and arriving at the outer wall face 2 is reflected on the outer wall face 2, arrives at the rear surface of the solar cell panel 5, and is used in power generation in the rear surface.

Meanwhile, as indicated by the arrow of FIG. 1A, the solar light that is introduced from the opening 7 between the vertically neighboring solar cell panels and the like and arrives at the outer wall face 2 is reflected on the outer wall face 2 and then, arrives at the rear surface of the solar cell panel and the like. The reflection light on the outer wall face 2 of the solar light introduced from the opening 7 between the solar cell panels and the like is stronger in a case where it is reflected on a glass surface, compared to a case where it is reflected on a structure (framework) surface. Therefore, the power generation efficiency on the rear surface of the solar cell panel 5 is high. However, since the reflection light on the structure surface also arrives at the rear surface of the solar cell panel 5, it is possible to ensure power generation in the rear surface of the solar cell panel 5 up to a certain level.

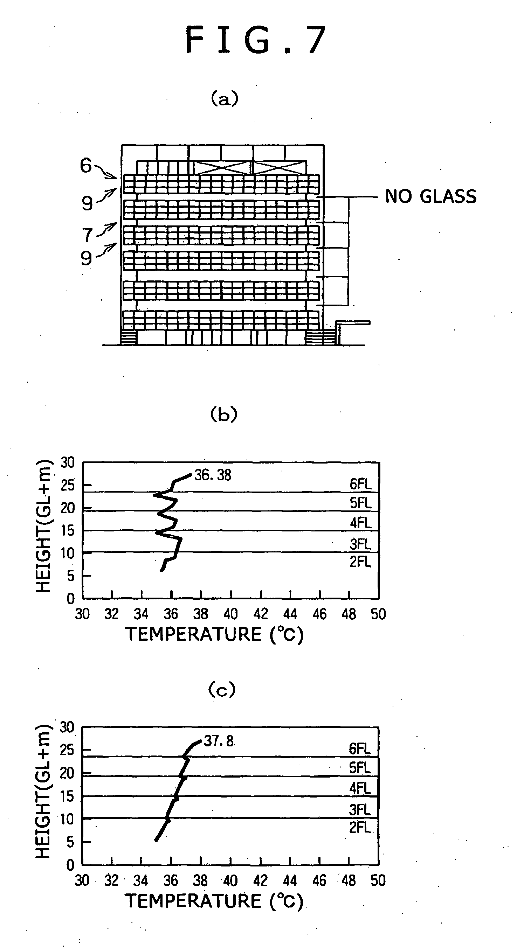

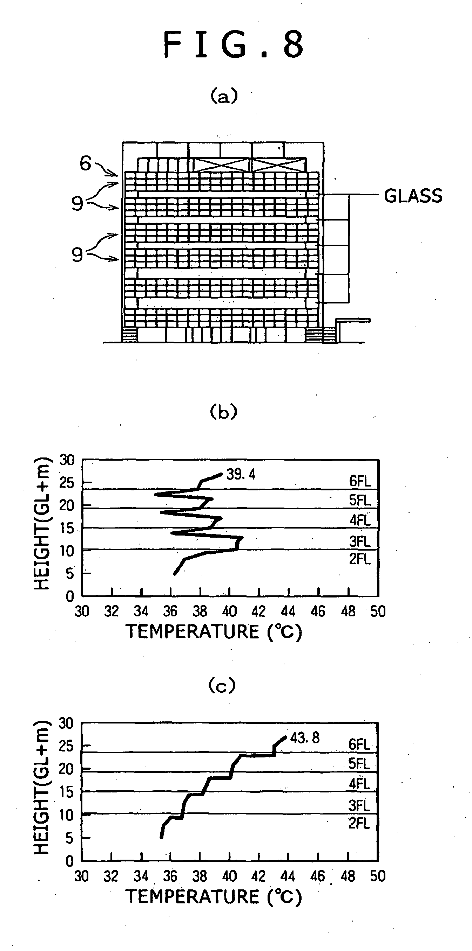

According to the present invention, as illustrated in FIG. 1A, the panel surface 6 is arranged in the exterior side of the outer wall face 2. Therefore, in a case where the opening 7 formed in a part of the height direction of the panel surface 6 is maintained in a closed state as illustrated in FIG. 8A, the outer wall including the outer wall face 2 and the panel surface 6 in appearance has a double skin structure, in which the air layer is interposed between the outer wall face 2 and the panel surface 6. However, as illustrated in FIG. 7A, in a case where the opening 7 is maintained in an opened state, the opening 7 serves as a ventilation duct for ventilating the rising air warmed in the outer wall face 2 side in the room to control the interior temperature. Therefore, the space between the outer wall face 2 and the panel surface 6 is not a simple air layer for circulating the air but serves as a buffer space for controlling a temperature of the air between the interior and exterior sides of the building structure 1.

FIGS. 7A and 8A illustrate the appearance (elevation surface) of the building structure 1 in which the support structure for the solar cell panel 5 according to the present invention is employed. According to the present invention, a part of the solar cell panels and the like arranged in a height direction become discontinuous as described above, and the opening 7 is formed between the vertically neighboring solar cell panels and the like, which is the discontinuous portion (regardless of the opened or closed state).

FIG. 8A illustrates the appearance in a case where a wall face material such as glass is stored in the opening 7 between the vertically neighboring solar cell panels and the like, and FIG. 7A illustrates the appearance in a case where the opening 7 is perfectly opened (Claim 4). FIG. 7A and FIG. 8A are different regarding whether or not the opening 7 is perfectly opened and whether or not glass and the like is stored and perfectly closed. In FIG. 8A, the opening 7 is closed to provide a double skin structure. FIGS. 7B, 7C, 8B, and 8C illustrate an interior temperature distribution in each floor (each stair) under an atmosphere (condition) of the exterior temperature of 34°C.

The height of the opening 7 is set to a dimension capable of allowing the solar light to arrive at the outer wall face 2 and the reflection light reflected on the outer wall face 2 to arrive at the rear surface of the solar cell panel 5 for some period of time (several hours) through the opening 7. However, in the drawings, as illustrated in FIG. 1A, specifically, the opening 7 has a height (corresponding to 1 to 2 solar cell panels) larger than the height of a single solar cell panel 5 (single stage).

In the case of FIG. 8A, since glass is stored between the vertically neighboring solar cell panels and the like, there is no place where the air warmed inside the outer wall face 2 (interior side) escapes in each floor. Therefore, the air existing in the buffer space between the outer wall face 2 and the panel package 6 moves to the uppermost floor of the building structure 1 and is then ventilated. In the case of FIG. 7A, the opening 7 is formed in each floor between the solar cell panels and the like as described above, the air in the buffer space can be ventilated to the exterior side from the openings 7 of each floor.

FIGS. 7B, 7C, 8B, and 8C illustrate temperature distributions in each floor (each stair) of the room space in the inner side (inner portion) of the outer wall face 2. FIGS. 7B and 8B illustrate temperature distributions in a case where ventilation from the room to the buffer space is performed in each floor, and FIGS. 7C and 8C illustrate temperature distributions in a case where ventilation from the room to the buffer space is not performed. In both cases of FIGS. 7A to 7C and 8A to 8C, ventilation from the room of each floor to the buffer space is performed from the inner side of the joist cavity 20 through the ventilation duct 21 as illustrated in FIGS. 2.

In the case of FIGS. 8A to 8C, the air in the buffer space is not directly ventilated to the exterior side from the buffer space even when ventilation from the room to the buffer space is performed. Therefore, a temperature in the area immediately under a position where the air is ventilated from the room of each stair to the buffer space increases. It is conceived that this is because the air of a high temperature discharged from the room to the buffer space is not immediately discharged to the exterior side from the buffer space and rises while it is accumulated in the buffer space. In addition, in a case where ventilation is not performed in each stair, the interior temperature tends to gradually rise from the lower floor to the upper floor as illustrated in FIG. 8C. The temperature rise amount from the lowermost floor to the uppermost floor is set to 8 to 9°C.

On the contrary, in the case of FIGS. 7A to 7C (Claim 4), there is the opening 7 maintained in an opened state in each stair as described above. Therefore, since the air discharged to the buffer space from the room of each stair is discharged to the exterior side through the opening 7, at least the air having a high temperature is not accumulated in the buffer space. As a result, as illustrated in FIG. 7B, the temperature in the area immediately under a position where the air is ventilated from the room of each stair to the buffer space does not rise. In this case, since ventilation from the buffer space is performed, the interior temperature rise from the lower floor to the upper floor is negligible, and the temperature rise amount from the lowermost stair to the uppermost stair stays at approximately 2°C even when ventilation from the room of each stair to the buffer space is not performed as illustrated in FIG. 7C.

Since the arm member 8 is installed between the outer wall face 2 and the vertical member 4, it may hinder the solar light reflected on the outer wall face 2 from arriving at the rear surface of the solar cell panel and the like. However, the overhang position of the arm member 8 in the height direction is set to, for example, a single position of the height direction per a single panel package 9 including a group of plural solar cell panels 5 arranged across a plurality of stages in the height direction (Claim 5), it is possible to suppress, to the minimum, hindrance of the solar light reflected on the outer wall face 2 from arriving at the rear surface of the panel package 9.

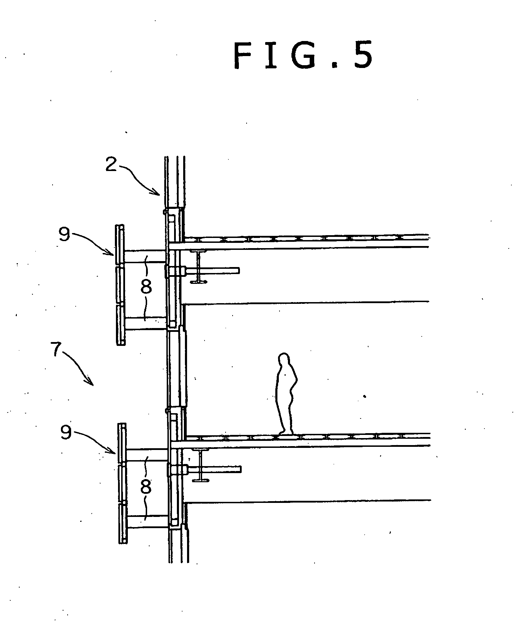

For example, in a case where the arm member 8 is not a line type member but a sheet type member, if the arm member 8 is installed between the outer wall face 2 and the vertical members 4 in two or more positions per a single panel package 9 as illustrated in FIG. 5, there is a high possibility that the solar light that arrives at the outer wall face 2 from the opening 7 provided between the vertically neighboring panel packages 9, 9 and is reflected is blocked by a plurality of arm members 8 before it arrives at the panel package 9.

In the case of FIG. 5, even when the reflection light on the outer wall face 2 transmits through the upper arm member 8, the lower arm member 8 blocks the light from arriving at the rear surface of the solar cell panel 5 or the panel package 9 (solar cell panels and the like) located in front thereof. Therefore, the reflection light capable of transmitting through the lower arm member 8 and arriving at the rear surface of the solar cell panel and the like is further reduced. This is similarly applied even when the arm member 8 is not a sheet type member but a line type member since a plurality of stages are arranged per a single solar cell panel and the like. The reflection light on the outer wall face 2 transmits through the sheet type arm member 8 in a case where the arm member 8 has a plurality of openings penetrating in a plate thickness direction in a grid shape such as gratings.

On the contrary, in Claim 5, even when the arm member 8 is a sheet type member, the arm member 8 is installed only in a single position per a single stair, and blockage of the reflection light is not overlapped. Therefore, a possibility of blocking the reflection light on the outer wall face 2 is lowered. In a case where the arm member 8 is not a sheet type member but a line type member, the reflection light easily transmits. Therefore, a possibility that the reflection light arrives at the rear surface of the solar cell panel and the like rises.

### EFFECT OF THE INVENTION

The solar cell panel and the like are arranged between the overhang members protruded side by side in a height direction in the exterior side of the vertical members juxtaposed with an interval in a structural in-plane horizontal direction of the outer wall face and juxtaposed in a structural in-plane horizontal direction, and the solar cell panel and the like are directly or indirectly held by the overhang members. Therefore, it is possible to remove a necessity of holding the solar cell panel and the like in both end portions of the longitudinal (horizontal) direction. For this reason, it is possible to reduce the number of members for holding the solar cell panel and the like and maintain both end portions of the longitudinal direction of the solar cell panel and the like in an opened state.

As a result, the solar cell panel and the like can receive the reflection light on the outer wall face in both end sides of the longitudinal direction and can receive the reflection light across a wide range, compared to a case where the solar cell panel and the like are held in four peripheries (for sides). Therefore, it is possible to improve power generation efficiency in the rear surface of the solar cell panel.

### BRIEF DESCRIPTION OF DRAWINGS

FIG. 1A is a vertical cross-sectional view illustrating a state that a solar cell panel is installed in a position separated from the outer wall face;
FIG. 1B is an elevational view illustrating the exterior side of FIG. 1A;
FIG. 2 is a vertical cross-sectional view illustrating a state of heat movement in the interior side of the solar cell panel and a state of solar light reflection while the solar cell panel of FIG. 1A is installed;
FIG. 3A is a vertical cross-sectional view schematically illustrating a installation state of the solar cell panel of FIG. 1A;
FIG. 3B is a vertical cross-sectional view illustrating a relationship between a height of the opening and an incidence angle of solar light as a condition for causing the light reflected on the outer wall face to arrive at the rear surface of the solar cell panel;
FIGS. 4A to 4C are vertical cross-sectional views illustrating an installation example for comparison with the solar cell panel support structure for the present invention, where FIG. 4A illustrates a case where the solar cell panel is installed closely to the outer wall face, FIG. 4B illustrates a case where the solar cell panel is installed to be horizontally overhung from the outer wall face, and FIG. 4C illustrates a case where a panel package including three solar cell panels is installed to have inclination with respect to the outer wall face;
FIG. 5 is a vertical cross-sectional view illustrating an installation example for comparison with the solar cell panel support structure for the present invention in a case where the panel package including three solar cell panels is supported by a structure using a pair of support members arranged in its height range;
FIG. 6A is a detailed view of FIG. 1A;
FIG. 6B is an enlarged view of the dashed-line circle portion of FIG. 6A;
FIG. 6C is a perspective view illustrating a relationship between the vertical member, the horizontal member, the linking member, and the overhang member;
FIG. 7A is an elevational view illustrating a building structure in which a solar cell panel support structure is employed in a case where the opening between vertically neighboring panel packages is maintained in an opened state;
FIG. 7B is a graph illustrating a height-temperature relationship in a case where surplus ventilation of the heated air from a buffer space between the panel package and the outer wall face occurs;
FIG. 7C is a graph illustrating a height-temperature relationship in a case where surplus ventilation from the buffer space does not occur;
FIG. 8A is an elevational view illustrating a building structure in which a solar cell panel support structure is employed in a case where the opening between the vertically neighboring panel packages is maintained in a closed state;
FIG. 8B is a graph illustrating a height-temperature relationship in a case where surplus ventilation of the heated air from the buffer space occurs; and
FIG. 8C is a graph illustrating a height-temperature relationship in a case where surplus ventilation from the buffer space does not occur.

### BEST MODE(S) FOR CARRYING OUT THE INVENTION

Hereinafter, best modes for carrying out the present invention will be described with reference to the accompanying drawings.

FIG. 1A illustrates an exemplary support structure for a double-sided power generation type solar cell panel in which a plurality of double-sided power generation type solar cell panels 5 are supported by the vertical members 4 supported by the building structure 1 in a position separated in a horizontal direction between the outer wall faces 2 having an opening 3. FIG. 1B illustrates the appearance (elevation surface) of the exterior side of FIG. 1A.

The double-sided power generation type solar cell panel 5 internally has a plurality of double-sided power generation type solar cells electrically connected to one another and receives light incident from at least one of front and rear surfaces to generate power.

The vertical members 4, 4 are supported by the arm members 8, 8 overhung from the outer wall face 2 to the exterior side in a structural out-of-plane direction and are juxtaposed with an interval in a horizontal direction of the structural in-plane direction of the outer wall face 2. The panel package 9 including a plurality of solar cell panels 5 or a group of plural solar cell panels 5 arranged across a plurality of stages in a height direction is supported by the vertical members 4, 4 juxtaposed in a structural in-plane horizontal direction while it faces the outer wall face 2. Hereinafter, the solar cell panel 5 and the panel package 9 may be collectively referred to as a solar cell panel 5 and the like. In addition, a surface of a plurality of solar cell panels 5 or the entire solar cell panel 5 is referred to as a panel surface 6.

From the exterior side of each vertical member 4 juxtaposed in a structural in-plane horizontal direction, the overhang members 12, 12 are overhung (protrude) side by side in a height direction as illustrated in FIGS. 6A to 6C and are juxtaposed in a horizontal direction of the structural in-plane direction. The horizontal members 10, 10 for holding upper and lower end portions of the solar cell panel 5 or the panel package 9 (solar cell panels and the like) are installed side by side in a height direction between the overhang members 12, 12 juxtaposed in both the height direction and the structural in-plane horizontal direction. The solar cell panel 5 or the panel package 9 (solar cell panel and the like) is held by the horizontal members 10, 10 juxtaposed in the height direction.

As illustrated in FIGS. 1A and 1B, the opening 7 is formed in at least a part of the panel surface 6 of a plurality of solar cell panels 5 or the entire solar cell panel 5 in the height direction. Due to the existence of the opening 7, the panel surface 6 becomes discontinuous in a height direction. FIG. 1A illustrates an exemplary case where there is no glass surface such as a window in the opening 7, and the opening 7 is maintained in a perfectly opened state. In this example, since the opening 7 is perfectly opened, the interior side appearance from the opening 3 of the outer wall face 2 is seen from the outside through the opening 7 as illustrated in FIG. 1B.

The outer wall face 2 of the building structure 1 may have a configuration that the arm member 8 overhung from the outer wall face 2 to the exterior side is capable of supporting the vertical member 4 which supports the panel surface 6 regardless of whether or not the outer wall face 2 is a load-bearing wall such as a framework or whether or not the outer wall face 2 is a non-load-bearing wall such as a curtain wall. The outer wall face 2 may support the arm member 8 such that the load applied to the panel package 9 including the solar cell panels 5 arranged across a plurality of stages and the vertical member 4 which supports the panel package 9 can be transferred to the arm member 8 overhung from the outer wall face 2.

A single panel package 9 includes a plurality of solar cell panels 5 arranged across a plurality of stages in a height direction as illustrated in FIG. 1A. The single panel package 9 is held as a single unit by the horizontal members 10, 10 juxtaposed in a height direction or by the vertical members 4, 4 juxtaposed in a structural in-plane horizontal direction. The panel package 9 is configured by arranging a single or a plurality of the solar cell panels 5 per each stage in a horizontal direction. The panel package 9 refers to a unit of the panel surface 6 partitioned by the opening 7 in a height direction. The panel surface 6 includes a plurality of panel packages 9 arranged in a height direction.

The height and the width (length) of a single solar cell panel 5 are arbitrarily set. However, the number of stages of the solar cell panels 5 of a single panel package 9 is set such that a sum of the height of the opening 7 between vertically neighboring panel packages 9, 9 and the height of a single panel package 9 corresponds to the height of a single stair (floor) of the building structure 1 as illustrated in FIGS. 1A, 1B, and 2.

In the illustration, a single unit of the panel package 9 includes the solar cell panels 5 across three stages. In this case, the height of a single solar cell panel 5 is determined such that a total sum obtained by adding a sum of the heights of three (or three stages of) solar cell panels 5 and the height of the opening 7 corresponds to the height of a single stair (floor) of the building structure 1. If this relationship between the dimension of a single panel package 9 and the height of a single stair (floor) is not satisfied, the position of the opening 7 between the panel packages 9, 9 and the opening 3 of the outer wall face 2 do not match, and the panel package 9 is deviated in a height direction with respect to the outer wall face 2.

In the illustration, a panel package 9 serving as a unit is configured by arranging the solar cell panels 5 across three stages in a height direction as illustrated in FIGS. 1A and 1B and arranging a plurality of solar cell panels 5 to neighbor in a structural in-plane direction (horizontal direction). Therefore, the width (length) is also standardized in a certain size.

However, in each panel package 9 including the solar cell panels 5 arranged across a plurality of stages in a height direction, the heights of each stage of the solar cell panel 5 are not necessarily constant. For example, out of three stages of the solar cell panels 5 of a single panel package 9, the height of the solar cell panel 5 arranged in the lowermost stage, the height of the solar cell panel 5 arranged in the center stage, and the height of the solar cell panel 5 arranged in the upper stage are not necessarily equal to one another. It is suitable that a plurality of solar cell panels 5 arranged in a structural in-plane horizontal direction have the same height.

It is suitable that the solar cell panels 5 of each stage in the panel package 9 have the same height, and the widths of the solar cell panels 5 (lengths in the horizontal direction) arranged (neighboring) in a horizontal direction are not necessarily constant. Similarly, out of plural horizontal columns, the width (length) of the solar cell panel 5 positioned in the outermost end position is not necessarily equal to the width (length) of the solar cell panel 5 positioned in the center.

The interval between the vertical members 4, 4, which support each solar cell panel 5, in the structural in-plane direction (horizontal direction) illustrated in FIG. 1B is determined depending on the width (length) of the solar cell panel 5 or the width (length) of the panel package 9 including a plurality of solar cell panels 5. However, in a case where the solar cell panel 5 or the panel package 9 is sufficiently held only using the horizontal members 10, 10 as illustrated in FIGS. 6A to 6C, the interval between the vertical members 4, 4 is not limited by the width of the solar cell panel 5 or the panel package 9.

In addition, the interval between the horizontal members 10, 10 illustrated in FIG. 1A, which are installed between the neighboring vertical members 4, 4 to hold and support the solar cell panel 5 or the panel package 9 solely or together with the vertical member 4, is determined depending on the height of the solar cell panel 5 or the panel package 9. FIGS. 6A to 6C illustrate an exemplary case where the vertically neighboring horizontal members 10, 10 solely holds the solar cell panel 5 or the panel package 9.

The vertical member 4 erected in a position separated from the outer wall face 2 in the exterior side is supported by the arm member 8 overhung horizontally or slantly from the outer wall face 2 and is indirectly supported by a structure (a structural member such as a pole or a beam) of the outer wall face 2. Basically, a line type member (having a bar shape) is used as the arm member 8 in order not to hinder the reflection light from arriving at the rear surface of the solar cell panel 5 arranged thereunder. Alternatively, a sheet type member may be used if it has a grating-like shape with a plurality of openings. If the arm member 8 is a line type member, the arm members 8 are arranged with an interval in a structural in-plane direction.

The arm member 8 is overhung to the vertical member 4 side from a pole, a beam, or other structural members as a structure (framework) included in the outer wall face 2 or positioned in the interior side of the outer wall face 2. The arm member 8 is connected (jointed) to the vertical member 4, for example, using bolt jointing and the like for integration such that the vertical member 4 is supported by the structural member. The arm member 8 is overhung basically in one place of the height direction per a single panel package 9 and is installed between the outer wall face 2 and the vertical member 4 in order to allow the reflection light of the solar light on the outer wall face 2 to arrive at the rear surface of the solar cell panel 5 without hindrance. However, the arm members 8 are not necessarily arranged in a single stage. The arm members 8 may be arranged across a plurality of stages if they do not hinder the reflection light from arriving at the rear surface of the solar cell panel 5.

FIG. 1A illustrates an exemplary case where the outer wall is divided into, for example, a wall portion of a structural wall (load-bearing wall) including a retaining wall erected from a slab and a hanging wall suspended from a slab and a window portion which is formed between upper and lower wall portions and stores glass or a sash having a openable/closable sliding door. Alternatively, the outer wall may be a curtain wall including a panel made of glass, precast concrete, and the like across the overall height of the building structure 1. If the outer wall is a curtain wall, the structural member such as a pole and a beam is arranged in the interior side of the outer wall panel (curtain wall panel) included in the outer wall. However, the arm member 8 which supports the vertical member 4 is shaped so as to penetrate the outer wall panel from the pole or the beam and be overhung in the exterior side of the outer wall face 2.

In the case of FIG. 1A, the arm member 8 is, for example, horizontally overhung from the wall portion (outer wall face 2) of the structural wall, and a leading end portion thereof is connected to the vertical member 4 for support. The arm member 8 supports the vertical member 4 by connecting (jointing) the vertical member 4 to the leading end portion. The pole or the beam may be integrated (continuously joined) into the wall portion. It is practical that the arm member 8 be overhung horizontally in order to suppress the overhanging length from the outer wall face 2 to the minimum. However, in order not to hinder the solar light from arriving at and being reflected by the outer wall face 2, the arm member 8 may be overhung and inclined upwardly from the outer wall face 2 to the vertical member 4 side.

The vertical members 4 are arranged with an interval in a structural in-plane horizontal direction of the outer wall face 2. The vertical members 4, 4 neighboring (juxtaposed) in that direction are connected to each other using the linking member 11 horizontally installed therebetween as illustrated in FIGS. 6A to 6C and basically constitute a grid together with the linking member 11.

Referring to FIG. 6C, the linking member 11 is installed in a connection (linking) portion between the vertical members 4, 4 and the arm members 8, 8. However, the position for temporarily installing the linking member 11 between the vertical members 4, 4 is arbitrarily set regardless of the position for connecting, to the vertical members 4, 4, the overhang members 12, 12 which support the horizontal members 10, 10 for vertically holding the solar cell panel 5 and the like. The linking members 11 may be arranged in a height direction with an interval set to have a function of constricting the neighboring vertical members 4, 4 with each other.

As illustrated in FIG. 6C, the overhang members 12, 12 are protruded (overhung) in each front surface side (exterior side) of the vertical members 4, 4 juxtaposed in a structural in-plane horizontal direction, and the overhang members 12, 12 are also juxtaposed in a structural in-plane horizontal direction. The horizontal member 10 is installed between the leading end portions of the overhang members 12, 12 juxtaposed in this structural in-plane horizontal direction and is connected (jointed) to the leading end portion of the overhang member 12 in both end portions of the longitudinal direction (axial direction). The overhang member 12 is protruded in the front surface side (exterior side) of the vertical member 4 in order to cause the rear surface of the solar cell panel 5 to be apart from the vertical member 4 so as to allow the reflection light which arrives at the outer wall face 2 from the opening 7 and is reflected on the outer wall face 2 to easily arrive at four corners of the rear surface of the solar cell panel 5.

The overhang member 12 connected (linked) to the exterior side of the vertical member 4 may be overhung so as to be continuously linked to the arm member 8 connected (linked) to the interior side of the vertical member 4 as illustrated in FIG. 6C or may be overhung with a step between the arm members 8.

The overhang members 12, 12 are overhung side by side in a height direction from each vertical member 4. The horizontal members 10, 10 for holding the upper and lower end portions of the panel package 9 are installed between the upper and lower overhang members 12, 12 and are juxtaposed in a height direction (vertically neighboring). The vertically neighboring horizontal members 10, 10 are paired to hold the solar cell panel 5 or the panel package 9.

The relationship between the vertical members 4, 4 neighboring in the structural in-plane horizontal direction, the overhang members 12, and the horizontal members 10 is illustrated in FIG. 6C. FIG. 6A illustrates a detailed example of FIG. 6C. FIG. 6A is a detailed view of FIG. 1A and illustrates a joint portion between the vertical member 4 and the horizontal member 10 and a holding state of the solar cell panel 5 or the panel package 9 in the joint portion. A detailed view of the horizontal member 10 of FIG. 6A is illustrated in FIG. 6B.

As illustrated in FIG. 6A, the panel package 9 is held by the horizontal member 10 positioned in each side of the both end portions (upper and lower end portions) in a height direction. The end portion of the width direction (horizontal direction) in each solar cell panel 5 included in the panel package 9 is linked to the solar cell panel 5 neighboring in that direction. A vertically symmetric H-steel beam is used in the horizontal member 10 since upper and lower end portions of a plurality of solar cell panels 5 included in a single panel package 9 are held by the horizontal members 10, 10 in the drawings. However, any type of the horizontal member 10 may be used, and a U-steel beam, an angle steel beam, or other steel materials may be used. In the case of FIG. 6A in which a single panel package 9 includes three solar cell panels 5, the horizontal members 10 are also arranged in two portions where vertically neighboring solar cell panels 5, 5 are mounted in addition to upper and lower end portions of the panel package 9.

In FIG. 6A, since at least both end portions (upper and lower end portions) of the height direction of the panel package 9 are held by the horizontal members 10, 10, the end portions of the horizontal direction of the panel package 9 are not necessarily held by the vertical members 4, 4 or similar substitutable members. As a result, the end portions (vertical portions) of the horizontal direction of the panel package 9 (solar cell panel 5) do not block light. Therefore, the rear surface of the end portion can receive the reflection light from the outer wall face 2, and it is possible to use the reflection light in power generation without loss.

An enlarged view of the dashed line circle portion of FIG. 6A is illustrated in FIG. 6B. As illustrated in FIG. 6B, specifically, the solar cell panel 5 or the panel package 9 is supported through bolt jointing, pin connection, and the like to fasteners 14 of angle steel (angle steel beam) and the like jointed (fixed) to upper and lower portions of the horizontal member 10, for example, while it is held by a metal frame member 13 made of an aluminum alloy and the like having upper and lower end trenches.

The solar cell panel 5 or the panel package 9 is fixed (jointed) while the frame member 13 integrated thereto makes contact with the front surface of the fastener 14. Therefore, the solar cell panel 5 or the panel package 9 is held in a state that its movement to the rear surface side (interior side) is constrained. The fastener 14 is fixed to an upper portion of the upper flange or a lower portion of the lower flange of the horizontal member 10 through bolt jointing, welding, and the like.

In the exemplary case of FIG. 6B, the frame member 13 is continuously linked in a longitudinal direction along upper and lower end portions of the solar cell panel 5 or the panel package 9. However, since a frame member for holding the solar cell panel 5 and the like is not necessary in a height direction, it is possible to keep the rear surface of the solar cell panel 5 and the like being exposed in a height direction and allow the rear surface to receive the reflection light from the outer wall face 2.

In FIG. 6B, a bracket 15 having a U-steel beam shape is fixed to an upper portion of the upper flange and a lower portion of the lower flange of the horizontal member 10 through welding and the like, and the frame member 13 is connected to the bracket 15 through engagement in a structural out-of-plane direction and a vertical direction.

### EXPLANATIONS OF LETTERS OR NUMERALS

- 1: BUILDING STRUCTURE
- 2: OUTER WALL FACE
- 3: OPENING
- 4: VERTICAL MEMBER
- 5: SOLAR CELL PANEL
- 6: PANEL SURFACE
- 7: OPENING
- 8: ARM MEMBER
- 9: PANEL PACKAGE
- 10: HORIZONTAL MEMBER
- 11: LINKING MEMBER
- 12: OVERHANG MEMBER
- 13: FRAME MEMBER
- 14: FASTENER
- 15: BRACKET
- 20: JOIST CAVITY
- 21: VENTILATION DUCT

## Claims

1. A support structure for a double-sided power generation type solar cell panel (5) capable of generating power by receiving light incident from both the front surface and the rear surface, the support structure comprising vertical members (4) and overhang members (12), wherein
the vertical members (4) are supported by at least one arm member (8) overhung in a structural out-of-plane direction from an outer wall face (2) of a building structure (1) having an opening and are juxtaposed with an interval in a horizontal direction of a structural in-plane direction of the outer wall face (2),
a panel package (9) including a plurality of double-sided power generation type solar cell panels (5) or a group of plural double-sided power generation type solar cell panels (5) arranged across a plurality of stages in a height direction is supported by the vertical members (4) while it faces the outer wall face (2),
each of the plural double-sided power generation type solar cell panels (5) or the panel package (9) is arranged between the overhang members (12) which protrude side by side in a height direction to an exterior side of each of the juxtaposed vertical members (4) and are juxtaposed in a horizontal direction of a structural in-plane direction, and
upper and lower end portions of each of the plural double-sided power generation type solar cell panels (5) or upper and lower end portions of the panel package (9) are directly or indirectly held by the overhang members (12) juxtaposed in a height direction.

2. The support structure for the double-sided power generation type solar cell panel (5) according to claim 1, wherein
horizontal members (10) for holding the upper and lower end portions of the solar cell panel (5) or the panel package (9) are installed side by side in a height direction between the juxtaposed overhang members (12), and
the solar cell panel (5) or the panel package (9) is held by the horizontal members (10) juxtaposed in the height direction.

3. The support structure for the double-sided power generation type solar cell panel (5) according to claim 1 or 2, wherein an opening (7) is formed in at least a part of a panel surface of a plurality of the solar cell panels (5) in a height direction, and the panel surface is discontinuous in a height direction.

4. The support structure for the double-sided power generation type solar cell panel (5) according to claim 3, wherein the opening (7) is maintained in an opened state or has an openable/closable state.

5. The support structure for the double-sided power generation type solar cell panel (5) according to any one of claims 1 to 4, wherein an overhang position of the arm member (8) in a height direction is a single position per a single panel package (9) including a group of plural solar cell panels (5) arranged across a plurality of stages in a height direction.

## Patentansprüche

1. Haltestruktur für ein Solarzellenpaneel (5) vom zweiseitigen Stromerzeugungstyp, das zur Erzeugung von Strom mittels sowohl von der Vorderfläche als auch der Rückfläche einfallenden Lichts fähig ist, wobei die Haltestruktur vertikale Elemente (4) und Überhangelemente (12) umfasst, wobei
die vertikalen Elemente (4) durch mindestens ein Armelement (8) gehalten werden, das in einer Richtung aus der Ebene der Struktur heraus aus einer äußeren Wandfläche (2) einer Gebäudestruktur (1) mit einer Öffnung überhängt, und mit einem Intervall in einer waagerechten Richtung in der Ebene der Struktur der äußeren Wandfläche (2) nebeneinander angeordnet sind,
ein Paneelpack (9), das mehrere Solarzellenpaneele (5) vom zweiseitigen Stromerzeugungstyp oder eine Gruppe von mehreren Solarzellenpaneelen (5) vom zweiseitigen Stromerzeugungstyp, die über mehrere Stufen in einer Höhenrichtung angeordnet sind, enthält, von den vertikalen Elementen (4) gehalten wird, während es der äußeren Wandfläche zugewandt ist,
jedes der mehreren Solarzellenpaneele (5) vom zweiseitigen Stromerzeugungstyp oder das Paneelpack (9) zwischen den Überhangelementen (12) angeordnet ist, die Seite an Seite in einer Höhenrichtung zu einer äußeren Seite jedes der nebeneinander angeordneten vertikalen Elemente (4) hervorragen und in einer waagerechten Richtung in der Ebene der Struktur nebeneinander angeordnet sind, und
obere und untere Endabschnitte jedes der mehreren Solarzellenpaneele (5) vom zweiseitigen Stromerzeugungstyp oder obere und untere Endabschnitte des Paneelpacks (9) direkt oder indirekt von den in einer Höhenrichtung nebeneinander angeordneten Überhangelementen (12) gehalten werden.

2. Haltestruktur für das Solarzellenpaneel (5) vom zweiseitigen Stromerzeugungstyp nach Anspruch 1, wobei
waagerechte Elemente (10) zum Halten der oberen und unteren Endabschnitte des Solarzellenpaneels (5) oder des Paneelpacks (9) Seite an Seite in einer Höhenrichtung zwischen den nebeneinander angeordneten Überhangelementen (12) installiert sind, und
das Solarzellenpaneel (5) oder das Paneelpack (9) von den in der Höhenrichtung nebeneinander angeordneten waagerechten Elementen (10) gehalten wird.

3. Haltestruktur für das Solarzellenpaneel (5) vom zweiseitigen Stromerzeugungstyp nach Anspruch 1 oder 2, wobei eine Öffnung (7) in zumindest einem Teil einer Paneeloberfläche von mehreren der Solarzellenpaneels (5) in einer Höhenrichtung gebildet ist und die Paneeloberfläche in einer Höhenrichtung diskontinuierlich verläuft.

4. Haltestruktur für das Solarzellenpaneel (5) vom zweiseitigen Stromerzeugungstyp nach Anspruch 3, wobei die Öffnung (7) in einem geöffneten Zustand gehalten wird oder einen Zustand mit Öffnungs- und Schließmöglichkeit aufweist.

5. Haltestruktur für das Solarzellenpaneel (5) vom zweiseitigen Stromerzeugungstyp nach einem der Ansprüche 1 bis 4, wobei eine Überhangposition des Armelements (8) in einer Höhenrichtung eine einzelne Position für ein einzelnes Paneelpack (9) ist, das eine Gruppe mehrerer Solarzellenpaneele (5) enthält, die über mehrere Stufen in einer Höhenrichtung angeordnet sind.

## Revendications

1. Structure de support pour un panneau de cellules solaires de type à production d'énergie double face (5) capable de produire de l'énergie en recevant une lumière incidente depuis à la fois la surface avant et la surface arrière, la structure de support comportant des éléments verticaux (4) et des éléments en surplomb (12), dans laquelle
des éléments verticaux (4) sont supportés par au moins un élément de bras (8) surplombé dans une direction de structure hors-plan d'une face de paroi extérieure (2) d'une structure de bâtiment (1) comprenant une ouverture et sont juxtaposés avec un intervalle dans une direction horizontale d'une direction de structure dans le plan de la face de paroi extérieure (2),
un paquet de panneaux (9) comprenant une pluralité de panneaux de cellules solaires de type à production d'énergie double face (5) ou un groupe d'une pluralité de panneaux de cellules solaires de type à production d'énergie double face (5) disposés à travers une pluralité d'étages dans une direction de hauteur est supporté par les éléments verticaux (4) alors qu'il est positionné en vis-à-vis de la face de paroi extérieure (2),
chacun de la pluralité de panneaux de cellules solaires de type à production d'énergie double face (5) ou le paquet de panneaux (9) est disposé entre les éléments en surplomb (12) qui font saillie côte à côte dans une direction de hauteur vers un côté extérieur de chacun des éléments verticaux juxtaposés (4) et sont juxtaposés dans une direction horizontale d'une direction de structure dans le plan, et
des parties d'extrémité supérieure et inférieure de chacun de la pluralité de panneaux de cellules solaires de type à production d'énergie double face (5) ou des parties d'extrémité supérieure et inférieure du paquet de panneaux (9) sont directement ou indirectement maintenues par les éléments en surplomb (12) juxtaposés dans une direction de hauteur.

2. structure de support pour le panneau de cellules solaires de type à production d'énergie double face (5) selon la revendication 1, dans laquelle
des éléments horizontaux (10) pour maintenir les parties d'extrémités supérieure et inférieure du panneau de cellules solaires (5) ou du paquet de panneaux (9) sont installés côte à côte dans une direction de hauteur entre les éléments en surplomb juxtaposés (12), et
le panneau de cellules solaires (5) ou le paquet de panneaux (9) est maintenu par les éléments horizontaux (10) juxtaposés dans la direction de hauteur.

3. Structure de support pour le panneau de cellules solaires de type à production d'énergie double face (5) selon la revendication 1 ou 2, dans laquelle une ouverture (7) est formée dans au moins une partie d'une surface de panneau d'une pluralité de panneaux de cellules solaires (5) dans une direction de hauteur, et la surface de panneau est discontinue dans une direction de hauteur.

4. Structure de support pour le panneau de cellules solaires de type à production d'énergie double face (5) selon la revendication 3, dans laquelle l'ouverture (7) est maintenue dans un état ouvert ou a un état pouvant être ouvert/fermé.

5. Structure de support pour le panneau de cellules solaires de type à production d'énergie double face (5) selon l'une quelconque des revendications 1 à 4, dans laquelle une position en surplomb de l'élément de bras (8) dans une direction de hauteur est une position unique pour un paquet de panneaux uniques (9) comprenant un groupe de plusieurs panneaux de cellules solaires (9) disposés à travers une pluralité d'étages dans une direction de hauteur.
